# EUROPEAN PATENT APPLICATION

(11) **EP 0 950 832 A1**
(43) Date of publication of application: **20.10.1999**
(21) Application number: 98830225.3
(22) Date of filing: 15.04.1998
(51) Int. Cl.: F16H 1/16

(54) **Transmission having non-parallel, non-coplanar axes using recirculation of balls with little clearance and friction**

(71) Applicant: ALA s.r.l. Automazioni Lavorative per Aziende, 87027 Paola (IT)
(72) Inventor: Segreti, Adolfo, 87027 Paola (IT)
(74) Representative: Sarpi, Maurizio

(57) **Abstract**

A mechanism for the transmission of a rotary movement between two shafts having non-parallel, non-coplanar axes comprising, in combination, a worm gear (1), a gear wheel or crown gear (2), and one or more balls (3) with or without recirculation, said balls being interposed between the contact surfaces of worm gear (1) and gear wheel (2).

Worm gear (1) and crown gear (2) have threads with corresponding pitches so that balls (3) can roll on the threads of worm gear (1) and on the surface of the teeth of gear wheel (2) at the same time.

The distance between gear wheel (2) and worm gear (1) depends on the size of balls (3) as well as on the shape of the section and the depth of the threads of worm gear (1) and gear wheel (2).

A series of balls each of them bearing portion of the total pressure between the threads of worm gear (1) and the teeth of gear wheel (2) are interposed between worm gear (1) and gear wheel (2), this allowing, using the same materials, the transmission of pressures and loads which are much greater than those which can be transmitted with the ordinary worm gear/gear wheel couplings.

The presence of balls rolling on the contact surfaces only entails a rolling friction so as to strongly reduce phenomena such as heating and vibrations and to increase the efficiency of the transmission.

## Description

The present invention relates to the precision mechanics and particularly to the transmission of a rotary movement between two orthogonal axes in a generally irreversible manner.

More particularly the invention relates to a coupling between a ball recirculation worm gear and a gear wheel or crown gear.

Several couplings between worm gears and crown gears are presently known; nevertheless, they have the drawback of an extremely low mechanical efficiency since the greater the surface of contact between the screw threads and the helical teeth of the gear wheel is, the greater the couple to be transmitted.

Therefore, the sliding friction yields to a great energy loss as well as to a considerable wear of the contact surfaces.

For these reasons great couples cannot be transmitted as the pressure build-ups and the consequent friction could not be allowed both because of the power required to move the apparatus and the wear of the contact surfaces.

There are also known to exist mechanisms which transform the rotary movement of a ball recirculation worm gear into the translation of a sleeve which is provided with an inside thread capable of engaging with said worm gear rotating with respect to said sleeve by a helical groove in which the balls moved by said worm gear roll.

Such mechanisms can advantageously even transmit a great power as the pressure between the contacting parts is distributed on the balls which are simultaneously in contact with the surface of the screw thread and the nut thread of the sleeve.

Moreover, friction is reduced as it is of the rolling type rather than of the sliding type because of the rolling of the balls.

The present invention seeks to overcome the problems of the prior art by providing a device which is capable of taking advantage of the use of the recirculation of balls in the transmission apparatus of the worm gear/gear wheel type.

According to the invention this is accomplished by providing a mechanism comprising a worm gear and a crown gear or gear wheel which includes balls located between the screw threads and the gear wheel threads, unlike the prior art.

A better understanding of the invention will ensue from the following detailed description with reference to the accompanying drawings which show only by way of example some preferred embodiments. In the drawings:

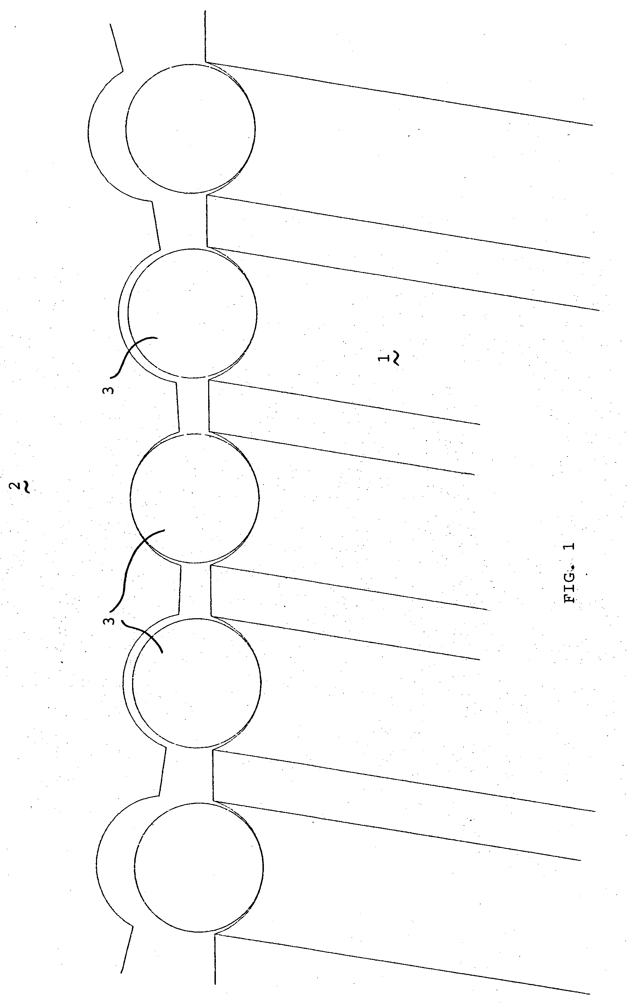

Figure 1 is a schematic view of the surface of contact between worm gear and gear wheel;

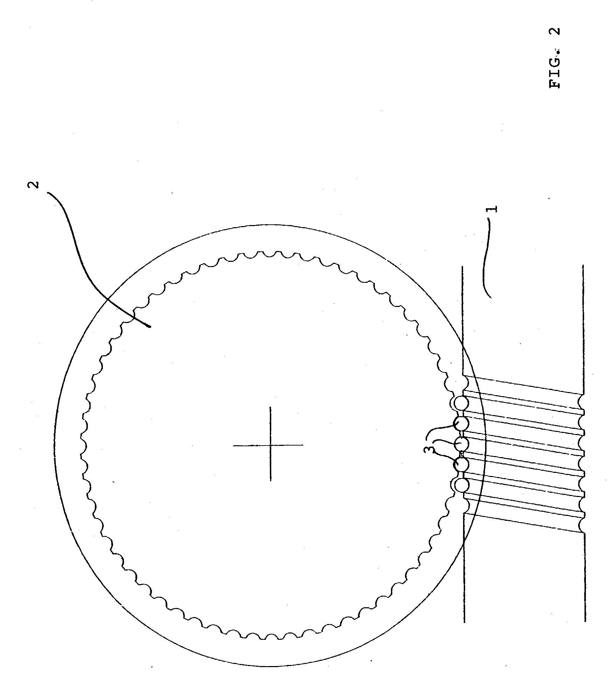

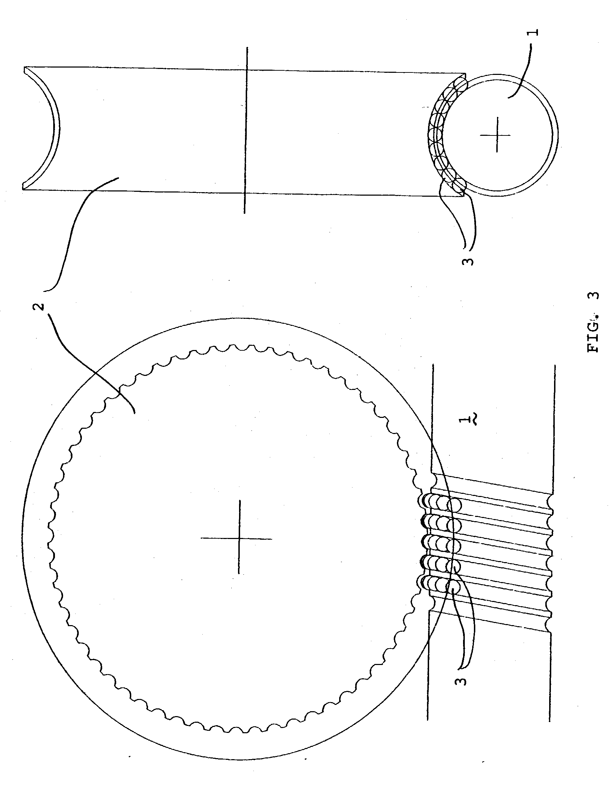

Figures 2 and 3 schematically show the reciprocal position of the essential components of the invention as well as the arrangement of the balls in the surface of contact;

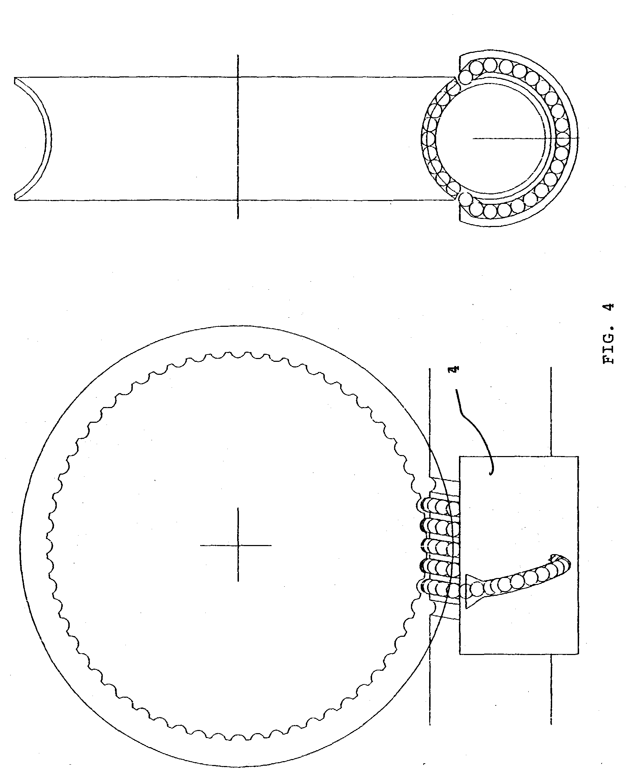

Figure 4 shows an example of recirculation of the balls;
Figure 5 is a schematic view like Fig. 1 of a second embodiment of the invention having threads with a different section;

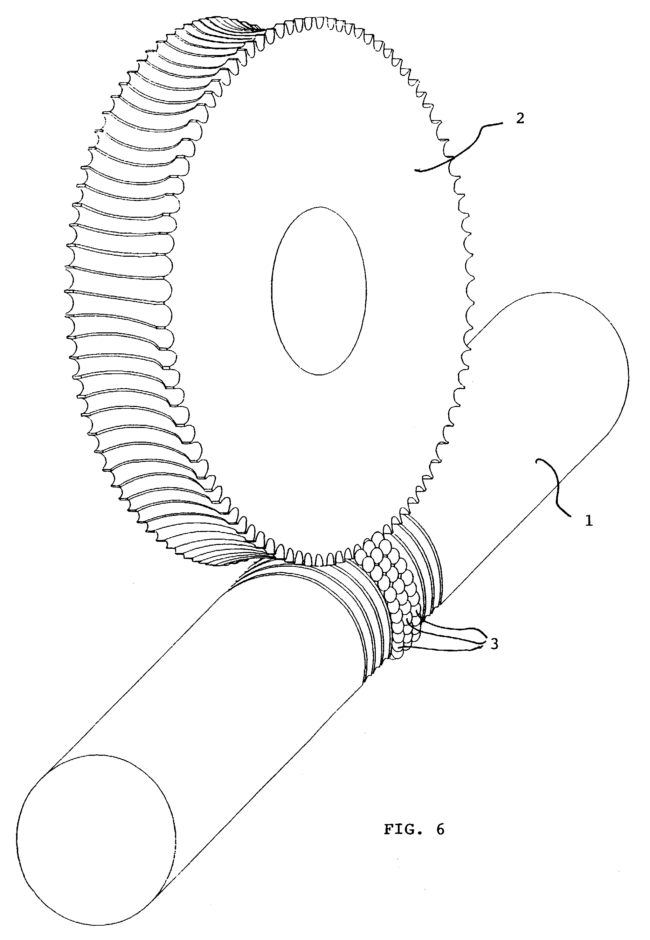

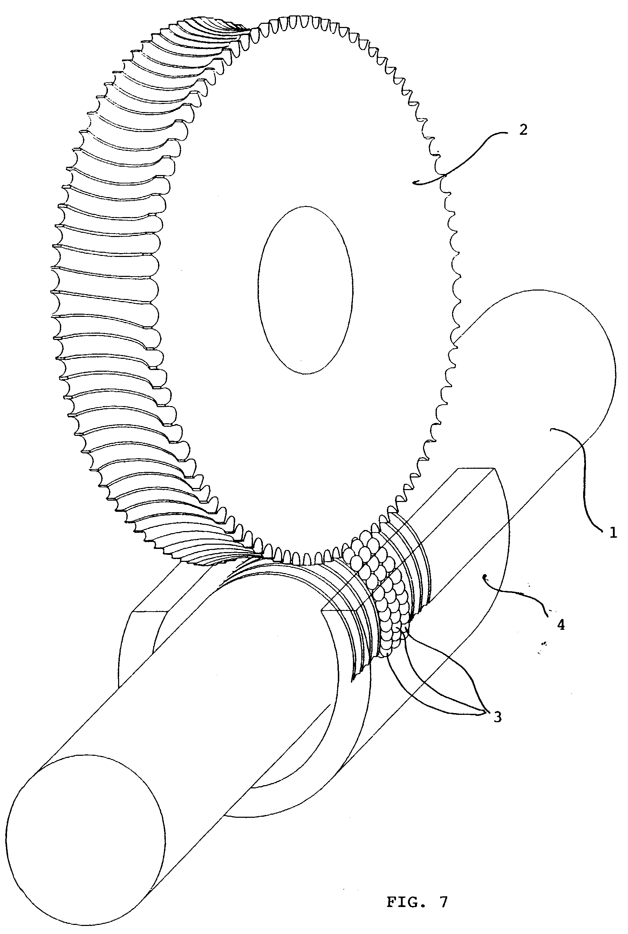

Figures 6 and 7 are axonometric views of the invention which show the arrangement and the recirculation of the balls.

With reference to the figures, the mechanism according to the invention includes a combination of a worm gear 1, a helical crown gear or gear wheel 2, and recirculation balls 3 located between worm gear 1 and gear wheel 2.

The axis of gear wheel 2 is not parallel to and not on the same plane as that of worm gear 1, and the angle between the two axes is preferably 90°, though not exclusively.

According to a peculiar aspect of the invention, worm gear 1 and crown gear 2 have threads with corresponding pitches so that balls 3 can roll at the same time along the threads of worm gear 1 and on the surface of the teeth of gear wheel 2.

The distance between gear wheel 2 and worm gear 1 depends on the size of balls 3, the slots of the threads of worm gear 1, and the slots of the threads of gear wheel 2.

As it is shown in the figures, there is a series of balls and not only one ball interposed between worm gear 1 and gear wheel 2, each of said balls in the series bearing a portion of the total pressure between the threads of the worm gear and the teeth of the gear wheel.

Advantageously, using the same materials, this allows the transmission of pressures and loads which are much higher than those which can be transmitted with the ordinary worm gear/gear wheel couplings.

It should be appreciated that phenomena such as heating and vibrations are strongly reduced because of friction of the rolling type rather than of the sliding type.

This involves a convenient wear reduction as well, with the consequent increase of the life and the reliability of the mechanism.

From the theoretical point of view, when a ball 3 touches the surface of the screw threads of worm gear 1 and the surface of helical teeth of gear wheel 2, respectively, said contact should take place at two opposite points so that said balls 3 roll on themselves without translating since said surfaces move in two opposite directions.

This is not the case for the known recirculation ball worm gears which move the recirculation split nut as the movement of the worm gear tends to translate the balls between worm gear and split nut.

In praxis, the translation movement of balls 3 decreases with a reduction in machining tolerances of the moving parts as well as with a reduction in the deformations of the materials used. Therefore, the precision with which the mechanism is fabricated determines whether a ball recirculation split nut 4 has to be provided or not.

According to another specific aspect of the invention, split nut 4 which provides for the recirculation of balls 3 does neither rotate nor translate, while it translates because of the axial movement caused by the worm gear in the ordinary ball recirculation worm gears.

To summarize, according to the invention helical gear wheel 2 and worm gear 1 rotate about their respective axes, while split nut 4 does not move with respect to the axis of gear wheel 2 and the longitudinal axis of worm gear 1.

The recirculation of balls 3 can be carried out in different ways. For example, an "inside" recirculation can be carried out so that balls 3 are returned back after each turn or there is provided an "outside" recirculation in which balls 3 rotate by several turns around worm gear 1 and then return to the staring thread on following an outside path, as it is shown.

In addition to those already mentioned, there are many other advantages. Actually, it should be appreciated that the reduction in friction and the consequent heating allow the necessary lubrication to be reduced and the efficiency of the transmission system to be increased in terms of power transmitted to gear wheel 2 with respect to the power transmitted to worm gear 1.

Again, the so-called "slick down", i.e. the need for a greater power on starting movement, is eliminated.

A further feature of the present invention, a matter of great importance especially in applications in which a high precision of movement is requested, is given by that the clearances are almost annulled. It should be appreciated that it is possible to pre-load worm gear 1 and gear wheel 2 just by bringing their respective axes closer or by increasing a little the diameters of balls 3.

It is of great interest to note that the section of the thread can have different shapes, i.e. the balls roll down along a race whose section may be trapezoidal, semicircular, Gothic-style arched, etc.

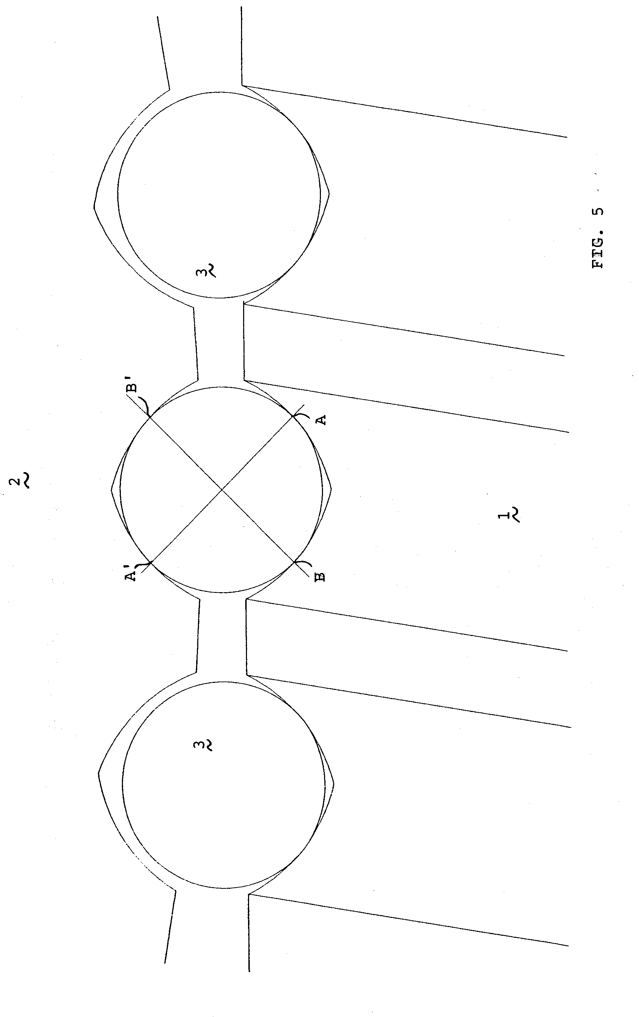

In a second embodiment of the invention, rolling races for balls 3 having sections with particular shapes such as those of Gothic-style arches are used in order to reduce the transmission clearance, which involves four support points A, A', B, B' for each ball 3: two A, B on worm gear 1 and two A', B' on gear wheel 2 (see Figure 5).

A construction of such a type advantageously allows the movement to be reversed without any positioning inaccuracy due to clearances among the moving parts.

The increase in the power which can be transmitted is also given, besides being given by a greater efficiency, by the fact that the rolling bodies, i.e. balls 3, bear static and dynamic loads which are greater than those which can be borne by gear wheels of the same size.

Finally, the possibility of reducing clearances by selecting races with particular shapes allows the preloads of the moving parts to be limited with a consequent further reduction in the absorbed power and increase in efficiency.

As already mentioned, the reduction in the absorbed power, in the heating and the vibrations advantageously sets limits to the wear of the moving parts. This implies unquestionable economical advantages both in terms of maintenance costs and savings in energy. It should be appreciated that the rolling friction in place of the sliding friction as well as the reduction in the absorbed power because of the limited pre-load allow less powerful motors to be employed with the same transmitted power and a sure saving in energy as well.

On the other hand, this also permits a higher power to be transmitted keeping the mechanical parts of the same size.

The present invention has been described and illustrated according to some preferred embodiments thereof, however, it should be understood that those skilled in the art can make modification and/or equivalent replacements without departing from the scope of the present industrial invention.

## Claims

1. A mechanism for the transmission of a rotary movement between two shafts having non-parallel, non-coplanar axes, characterized in that it includes in combination a worm gear (1), a gear wheel or crown gear (2), and one or more balls (3) with or without recirculation, said balls being interposed between the contact surfaces of worm gear (1) and gear wheel (2).

2. The mechanism for the transmission of a rotary movement of claim 1, characterized in that worm gear (1) and crown gear (2) have threads with corresponding pitches so that balls (3) can roll at the same time on the threads of worm gear (1) and on the surface of the teeth of gear wheel (2).

3. The mechanism for the transmission of a rotary movement of the preceding claims, characterized in that the distance between gear wheel (2) and worm gear (1) depends on the size of balls (3) as well as on the shape of the section and on the depth of the threads of worm gear (1) and gear wheel (2).

4. The mechanism for the transmission of a rotary movement of the preceding claims, characterized in that a series of balls each of them bearing a portion of the total pressure between the threads of worm gear (1) and the teeth of gear wheel (2) is interposed between worm gear (1) and gear wheel (2), this allowing, using the same materials, the transmission of pressures and loads which are much greater than those which can be transmitted with the ordinary worm gear/gear wheel couplings.

5. The mechanism for the transmission of a rotary movement of the preceding claims, characterized in that the presence of balls rolling on the contact surfaces only entails a rolling friction so as to strongly reduce phenomena such as heating and vibrations and to increase the efficiency of the transmission.

6. The mechanism for the transmission of a rotary movement of the preceding claims, characterized in that each ball (3) touches both the surface of the screw threads of worm gear (1) and the surface of the helical teeth of gear wheel (2) at two opposite points so that, since said surfaces move in two opposite directions, each ball (3) tends to roll on itself with an as lower translation as more accurate the coupling is.

7. The mechanism for the transmission of a rotary movement of claim 6, characterized in that a split nut (4) for the recirculation of balls (3) is provided so as to make use of the translation of said balls.

8. The mechanism for the transmission of a rotary movement of the preceding claims, characterized in that helical gear wheel (2) and worm gear (1) rotate about their respective axes, while split nut (4) providing for the recirculation of balls (3) does neither rotate nor translate and keeps still with respect to the axis of gear wheel (2) and the longitudinal axis of worm gear (1).

9. The mechanism for the transmission of a rotary movement of the preceding claims, characterized in that the recirculation of balls (3) is carried out indifferently with an "inside" recirculation so that balls (3) are returned back after each turn or with an "outside" recirculation in which balls (3) rotate by several turns around worm gear (1) and then return to the staring thread on following an outside path formed in split nut (4).

10. The mechanism for the transmission of a rotary movement of the preceding claims, characterized in that in order to almost annul clearances, worm gear (1) and gear wheel (2) are pre-loaded just by bringing the respective axes nearer and/or by increasing a little the diameters of balls (3).

11. The mechanism for the transmission of a rotary movement of the preceding claims, characterized in that the sections of the threads of gear wheel (2) may have particular shapes such as trapezoidal, semicircular or that of the Gothic-style arches etc. in order to reduce the transmission clearances which occur especially during the reversal of movement.

12. The mechanism for the transmission of a rotary movement of the preceding claims, characterized in that rolling races for balls (3) having sections with shapes such as those of Gothic-style arches are used in order to reduce transmission clearances so as to have four support points (A, A', B, B') for each ball (3), two of which (A, B) on worm gear (1) and the other two (A', B') on gear wheel (2).
